# DEMANDE DE BREVET EUROPEEN

(11) **EP 1 083 305 A1**
(43) Date de publication de la demande: **14.03.2001**
(21) Numéro de dépôt: 99810805.4
(22) Date de dépôt: 08.09.1999
(51) Int. Cl.: F01N 3/04

(54) **Procédé et dispositif de dépollution des gaz de combustion**

(71) Demandeur: Indtec Industrialisation et Technologie S.A., 1950 Sion (CH)
(72) Inventeur: Bruzzo, Vital, San Germano dei Berici (Vincenza) (IT)
(74) Mandataire: Wenger, Joel-Théophile

(57) **Abrégé**

Il est proposé un dispositif de dépollution des gaz de combustion placé le long de l'échappement desdits gaz. Ce dispositif comprend une chambre de refroidissement (9, 10) des gaz abaissant leur température proche de zéro degré. Selon une forme de l'invention, l'énergie des gaz d'échappement d'un moteur à combustion interne est utilisée pour produire le froid nécessaire au processus de dépollution.

## Description

La présente invention concerne un procédé et dispositif de traitement des gaz de combustion, et plus particulièrement un procédé et un dispositif pour la dépollution de gaz de combustion.

Lors d'une combustion de carburants tels que l'essence ou le gazole, un grand nombre de composés sont produits tels que les oxydes d'azote (NO_{X}), le monoxyde de carbone (CO) et les hydrocarbures (HC). A cela s'ajoute l'ozone (O₃), un polluant secondaire formé par des réactions photochimiques entre oxydes d'azote et hydrocarbures.

Les pouvoirs publics ont encouragé les recherches dans le but de réduire ces émissions nocives, et de nombreux dispositifs on été proposés. On connaît, dans le domaine de l'automobile, l'utilisation du catalyseur dont l'action est de brûler ces substances nocives.

Malheureusement, le catalyseur ne fait que réduire certaines émissions, et en contrepartie transforme certains composés en substances encore plus dangereuses.

D'autres solutions ont été présentées, en particulier dans le domaine de l'industrie, avec l'utilisation de filtres à eau placés dans les conduits de cheminées pour capturer et récupérer des substances toxiques dans de l'eau. Cette eau est ensuite retraitée afin de la séparer de ces substances et est ensuite réinjectée dans le circuit de filtration.

Bien qu'une certaine amélioration de la qualité de l'air aie été constatée grâce à l'utilisation de dispositifs de dépollution, ceux-ci présentent des lacunes, soit dans leur mise en oeuvre, soit de par leur coût ou leur efficacité.

Le but de la présente invention est de proposer un procédé et dispositif qui supprime 100% des substances les plus toxiques tout en ne générant aucune autre substance nouvelle.

Ce but est pleinement atteint par le dispositif de dépollution des gaz de combustion de la présente invention, caractérisé en ce que ce dispositif comprend une chambre de refroidissement des gaz à basse température.

Selon l'invention, le procédé consiste à dépolluer les gaz de combustion en les refroidissant à basse température.

L'effet de dépollution est obtenu par la condensation des substances polluantes dans une chambre où les gaz sont refroidis à une température de quelques degrés au-dessus de zéro. L'effet de condensation se produit dès lors que l'on refroidit les gaz, plus la température descend, plus l'effet augmente.

La température optimale de condensation se situe près de zéro degré Celsius de préférence entre 3 et 6 °C, c'est-à-dire juste avant que des cristaux de glace ne se forment. En effet, la formation de glace aurait pour conséquence l'obstruction rapide de l'échappement.

Le liquide de condensation est ensuite récupéré en vue de son élimination écologique.

Ce type de dispositif peut être utilisé sur un grand nombre d'installations, par exemple sur les cheminées d'usine d'incinération, ainsi que pour d'autres applications de cheminées industrielles, ainsi que dans le domaine des véhicules à moteur à combustion interne.

Dans ce dernier domaine, la présente invention s'étend également à un dispositif de production de froid (par exemple la climatisation) par récupération de l'énergie des gaz d'échappement du véhicule.

De tels dispositifs sont décrits dans l'état de la technique, en particulier dans le document US 5'383'341. Ce document décrit un système de réfrigération basé sur le principe de l'absorption, et dont l'énergie est fournie par les gaz d'échappement. Ce système ne concerne que l'utilisation judicieuse de l'énergie générée par les gaz, qui est transformée en une autre forme, du froid par exemple.

Bien que le but principal de cette invention est la dépollution des gaz de combustion, l'invention s'étend également à un système performant pour IA production de puissance frigorifique par récupération de l'énergie des gaz de combustion.

Cet effet est atteint par l'utilisation d'un évaporateur placé dans le pot d'échappement qui refroidit substantiellement lesdits gaz. Des récupérateurs placés le long de l'évaporateur collectent le liquide de condensation. Ce liquide peut être, soit éliminé écologiquement à un rythme équivalent à la vidange de l'huile moteur, ou soit réinjecté dans le réservoir. En effet, au vu de sa production en faible quantité, son adjonction à l'essence ou au diesel ne pose aucun problème.

Dans une forme particulière de l'invention, le liquide utilisé pour le cycle thermique est un mélange d'eau et d'ammoniac. Ce dernier présente une bonne propriété d'expansion, caractéristique essentielle dans ce type d'utilisation. Des essais ont montré qu'au delà de 70% d'eau dans le mélange, le cycle ne fonctionne plus de manière optimale.

L'invention sera mieux comprise grâce à la description détaillée qui va suivre en se référant aux dessins annexés qui sont donnés à titre d'exemple nullement limitatif, dans lesquels :

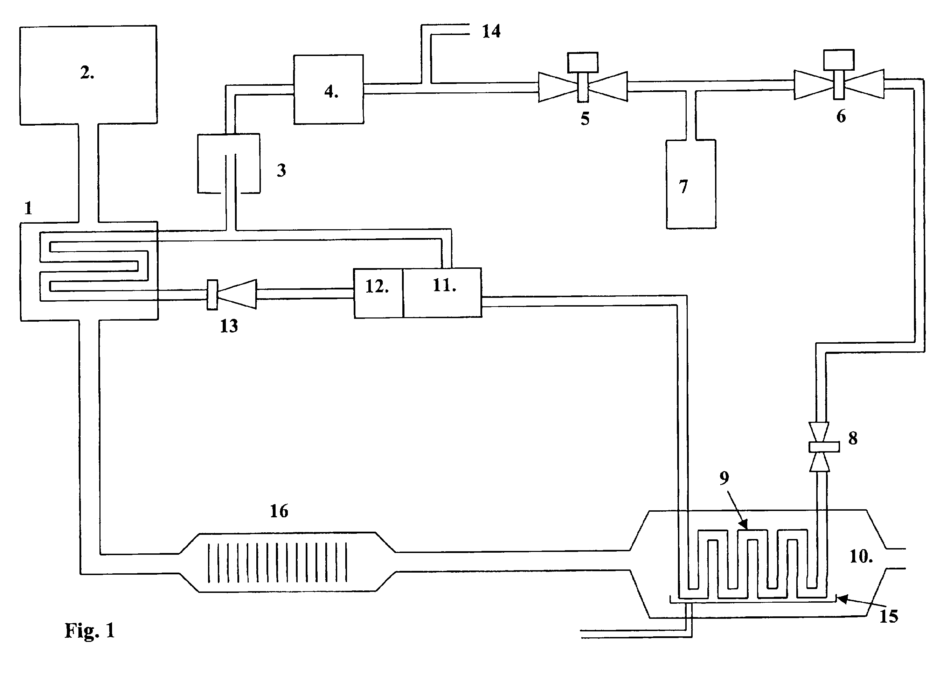

- La figure 1 représente le système de dépollution des gaz utilisant comme source d'énergie les gaz de combustion d'un moteur à explosion;
- La figure 2 représente un dispositif de nettoyage automatique de l'évaporateur.

**TABLEAU**

| Désignation de la substance | Quantité avant le filtre(% du volume) | Quantité après le filtre (% du volume) |
|---|---|---|
| Toluène | 0.28 | 0 |
| 2,4-Diméthylheptène | - | - |
| Octanal | 0.1 | 0 |
| n-Nonane | 0.17 | 0 |
| N-Décane | - | - |
| 4-Méthyldécane | 0.32 | 0 |
| Propylcyclopentane | 0.16 | 0 |
| Undécane | - | - |
| Dodécane | - | - |
| 1-Chlorohexadécane | 0.01 | 0 |
| 1-Chloro-octadécane | 0.01 | 0 |
| n-Tridécane | 0.08 | 0 |
| 1 ,2,3,4-Tétrahydro-5- | - | - |
| n-Tétradécane | - | - |
| 2,7-Diméthylnaphtalène | - | - |
| Cyclotétradécane | 0.1 | 0 |
| 2,6,11-Triméthyldodécane | 0.2 | 0 |
| 3,8-Diméthyldécane | 0.1 | 0 |
| n-Pentadécane | 0.42 | 0 |
| n-Hexadécane | - | - |
| n-Eicosane | - | - |
| n-Heptadécane | - | - |
| n-Octadécane | - | - |

Sur le Tableau on a représenté le résultat de l'analyse d'un échantillon d'émissions de gaz d'échappement d'un tracteur sur lequel le système selon l'invention a été monté. On peut observer que tous les composés de faible poids moléculaire ont été supprimé à 100%. D'une manière générale, des polluants de faible poids moléculaire tels que le toluène, l'aldéide ainsi certains hydrocarbures de faible poids (par exemple la chloroparaffine) disparaissent complètement. Ne restent que les molécules de poids importantes qui échappent à la condensation. On notera en particulier l'élimination totale du toluène, substance connue comme dangereuse. Globalement, avec l'abaissement de la température des gaz à 6°C, on élimine 75% des polluants.

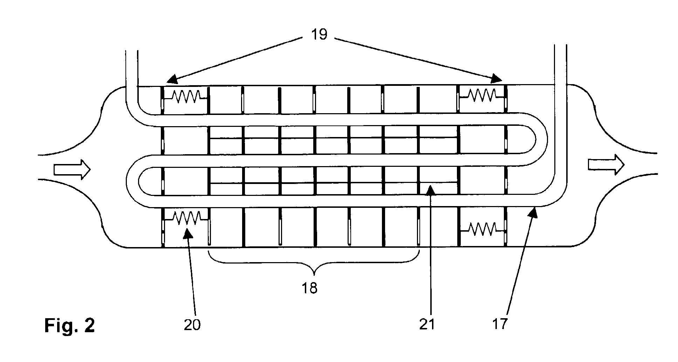

La figure 2 représente un système complet d'utilisation de l'invention sur un véhicule, avec une utilisation première pour l'application de dépollution et secondairement comme production de froid pour le véhicule. Le mélange eau-ammoniac passe par le bouilleur 1 alimenté en chaleur par les gaz d'échappement sortant du moteur 2. Le point d'ébullition de l'ammoniac est très bas (de l'ordre de -33°C) et sous l'effet de la chaleur des gaz, il s'évapore, abandonnant l'eau dans laquelle il était mélangé. Du fait qu'une partie de l'eau se vaporise également, on place un séparateur de liquide 3 qui a pour mission de retenir les vapeurs d'eau et de laisser passer les vapeurs d'ammoniac. Ces vapeurs passent ensuite par un condenseur 4 qui transforme sous forme liquide grâce à la pression produite par le système.

Une des particularités de cet ensemble est constituée par les électrovannes 5 et 6 et le réservoir 7. La première électrovanne 5 s'ouvre dès lors que la pression côté réservoir est plus faible que côté condenseur 4. La deuxième électrovanne 6 est commandée par le contact d'alimentation du moteur. A l'arrêt, l'électrovanne 6 est fermée et l'électrovanne 5 se ferme dès lors que la pression provoquée par l'évaporation de l'ammoniac disparaît, c'est-à-dire lorsque les gaz n'échauffent plus le bouilleur 1. Dans ce cas, le réservoir 7 conserve la pression de fonctionnement sous forme liquide, les deux électrovannes étant fermées.

Lors du démarrage du moteur, l'électrovanne 6 s'ouvre et la pression accumulée dans le réservoir 7 produit immédiatement du froid dans l'évaporateur de l'échappement. Cette configuration se distingue du système à pot catalytique qui ne fonctionne pas immédiatement, ce dernier nécessitant un temps de chauffe de plusieurs minutes.

En amont du pot d'échappement final, on trouve un premier étage de refroidissement 16 qui permet d'abaisser la température des gaz à environ 50 °C.

Près du pot d'échappement 10, on trouve la valve d'expansion 8 régulée par un capteur de température (non représenté). Par expansion, l'ammoniac est vaporisé dans l'évaporateur 9 provoquant un abaissement de la température pouvant atteindre -25°C. La valve d'expansion 8 est régulée pour refroidir les gaz du pot d'échappement 10 à environ 4°C.

A l'intérieur du pot 10, sous l'évaporateur 9 se trouve le récupérateur de liquide de condensation 15. Un canal permet de pomper ce liquide et de le reinjecté dans le réservoir.

La pression de l'ammoniac initialement à environ 15 bars à la sortie du bouilleur termine à environ 1 ou 2 bars dans l'évaporateur 9. Une fois le cycle terminé, l'ammoniac est envoyé dans l'absorbeur 11 pour être absorbé par l'eau puis propulsé par une pompe 12 dans le bouilleur 1. Une vanne anti-retour 13 empêche le mélange de refluer dans la pompe à l'arrêt du moteur.

Dans une forme de l'invention, une partie de l'ammoniac sous pression est dérivée dans un deuxième circuit 14 pour la production de froid pour refroidir l'habitacle ou une chambre frigorifique du véhicule. A noter que la production de froid de cette manière, non seulement ne consomme pratiquement aucune énergie donc ne nuit en rien au rendement du véhicule, ce qui est loin d'être le cas des systèmes actuels, mais a pour avantage de dépolluer les gaz de ce véhicule.

La figure 3 indique une manière élégante pour éviter la formation de dépôt le long du serpentin 17 placé dans le pot d'échappement 10. Il est connu que les gaz d'échappement encrassent rapidement le serpentin 17 et que le rendement décline rapidement. Pour éviter cet encrassement, il est proposé une solution inédite qui consiste à monter le serpentin 17 entre deux plaques fixes 19 à chaque extrémité, et une pluralité de plaques mobiles 18 entre ces deux plaques. Les plaques fixes 19 comportent un grand nombre d'orifices pour laisser passer librement les gaz. Les plaques mobiles 18 sont tenues entre elles par des entretoises 21 et l'ensemble formé de ces plaques est maintenu dans la position de repos par des ressorts à faible moment de rappel 20, reliés aux plaques fixes 19. Ainsi, lorsque les gaz d'échappement entrent dans le pot, ils poussent les plaques mobiles 18 qui frottent le serpentin sur sa longueur, le débarrassant des résidus qui s'y sont fixés. Lorsque le régime du moteur décroît brusquement, une pression inverse est induite dans le pot d'échappement et les plaques mobiles 18 sont attirées vers l'entrée du pot. Ce mouvement de va-et-vient permet d'assurer un nettoyage automatique du serpentin.

Il est clair que les plaques mobiles 18 ne ferment pas complètement le diamètre du pot mais sont partiellement ouvertes, l'une sur sa partie inférieure, la suivante sur sa partie supérieure et ainsi de suite. Cette disposition force les gaz à effectuer un zigzag avant de finir leur chemin à la sortie du pot, et assure une pression contre les plaques mobiles.

## Revendications

1. Dispositif de dépollution des gaz de combustion placé le long de l'échappement desdits gaz, caractérisé en ce qu'il comprend une chambre de refroidissement (9, 10) des gaz à basse température.

2. Dispositif selon la revendication 1, caractérisé en ce que cette chambre est régulée pour refroidir les gaz entre 3 et 6 degrés Celcius.

3. Dispositif selon les revendications 1 ou 2, caractérisé en ce qu'il comprend un récupérateur (15) des gaz condensés.

4. Dispositif selon les revendications 1 à 3, caractérisé en ce qu'il est monté sur un véhicule à moteur et qu'il comprend un bouilleur (1) placé à la sortie du moteur (2) dont l'énergie thermique des gaz d'échappement produit l'évaporation d'un mélange eau-ammoniac, d'un séparateur de liquide (3) destiné à ne laisser passer que les vapeurs d'ammoniac, d'une vanne d'expansion (8) placé en amont de l'évaporateur (9) monté dans le pot d'échappement (10) et refroidissant les gaz, un absorbeur (11) pour absorber l'ammoniac dans l'eau et une pompe (12) pour envoyer le mélange eau-ammonaic dans le bouilleur (1).

5. Dispositif selon la revendication 4, caractérisé en ce qu'il comprend un ensemble de stockage (5, 6, 7) de liquide sous pression comprenant une première électrovanne (5) ouverte si la pression amont est supérieure à la pression aval, une deuxième électrovanne ouverte dès lors que le moteur (2) fonctionne, et un réservoir (7) placé entre ces deux électrovannes accumulant les liquides sous pression.

6. Dispositif selon les revendications 4 et 5, caractérisé en ce que l'évaporateur (9) est composé d'un serpentin (17) allongé dont les parties rectilignes sont maintenue espacées par des plaques mobiles (18) se déplaçant longitudinalement le long des parties rectilignes du serpentin (17) sous la pression des gaz d'échappement et assurant le nettoyage dudit serpentin (17).

7. Procédé de dépollution des gaz de combustion caractérisé en ce qu'il consiste à refroidir lesdits gaz à une basse température pour provoquer la condensation des substances polluantes.

8. Procédé selon la revendication 1, caractérisé en ce qu'il refroidit les gaz à une température située entre 3 et 6°C.

9. Procédé selon l'une des revendications 1 ou 2, caractérisé en ce qu'il consiste à récupérer le liquide résultat de la condensation des gaz.

10. Procédé selon l'une des revendications précédantes, caractérisé en ce qu'il consiste à utiliser l'énergie thermique des gaz d'échappement pour alimenter une unité de refroidissement basée sur un mélange eau-ammoniac.
